Europäisches Patentamt

European Patent Office

Office européen des brevets

(19)

(11) Publication number : **0 150 135 B2**

# NEW EUROPEAN PATENT SPECIFICATION

(45) Date of publication of the new patent
specification : **25.03.92 Bulletin 92/13**

(51) Int. Cl.⁵ : **H01B 3/12**, H01G 4/12,
C04B 35/46, // C01G23/00

(21) Application number : **85300451.3**

(22) Date of filing : **23.01.85**

(54) **Dielectric barium-strontium titanate fine powders.**

The file contains technical information
submitted after the application was filed and
not included in this specification

(30) Priority : **24.01.84 JP 10834/84**

(43) Date of publication of application :
**31.07.85 Bulletin 85/31**

(45) Publication of the grant of the patent :
**09.09.87 Bulletin 87/37**

(45) Mention of the opposition decision :
**25.03.92 Bulletin 92/13**

(84) Designated Contracting States :
**DE FR GB NL**

(56) References cited :
WO-A-82/04254
"INORGANIC MATERIALS", Translation of
Izvestiya Akademii Nauk SSSR, Neor-
ganicheskie Materialy, vol. 11, no. 7, Decem-
ber 1975, (date relating to translation) Kiev,
USSR, A.M. Golub et al.: "Preparation of
Barium Titanate.....", pages 1876-1879

(73) Proprietor : **SONY CORPORATION**
**7-35 Kitashinagawa 6-Chome Shinagawa-ku**
**Tokyo 141 (JP)**

(72) Inventor : **Uedaira, Satoru c/o Patent Division**
**Sony Corporation 7-35 Kitashinagawa-6**
**Shinagawa-ku Tokyo (JP)**
Inventor : **Yamanoi, Hiroshi c/o Patent Division**
**Sony Corporation 7-35 Kitashinagawa-6**
**Shinagawa-ku Tokyo (JP)**
Inventor : **Yamaguchi, Takashi c/o Patent**
**Division**
**Sony Corporation 7-35 Kitashinagawa-6**
**Shinagawa-ku Tokyo (JP)**
Inventor : **Suzuki, Masayuki c/o Patent Division**
**Sony Corporation 7-35 Kitashinagawa-6**
**Shinagawa-ku Tokyo (JP)**
Inventor : **Tamura, Hidemasa c/o Patent**
**Division**
**Sony Corporation 7-35 Kitashinagawa-6**
**Shinagawa-ku Tokyo (JP)**

(74) Representative : **Thomas, Christopher Hugo et**
**al**
**D Young & Co 10 Staple Inn**
**London WC1V 7RD (GB)**

EP 0 150 135 B2

## Description

This invention relates to methods of manufacturing dielectric barium-strontium titanate fine powders, and to dielectric barium-strontium titanate fine powders so made.

Recently, methods of forming ceramic material, which is a functional electronic material, as a fine powder has been studied from various angles. One application of such fine powders of ceramic material is in producing capacitors. As electronic products are made smaller in size and with higher densities, capacitors which are small in size, light in weight, large in capacitance and improved in high frequency characteristics are required. In a ceramic capacitor, in order to make it thin and uniform, the ceramic material must be formed into a fine powder.

As one of such ceramic materials, there is known barium-strontium titane $Ba_{1-x}Sr_xTiO_3$ (O is less than x is less than 1). A previously proposed method of manufacturing such fine powder, is a solid phase reaction method, which uses $BaCO_3$, $SrCO_3$ and $TiO_2$ as the raw material. In this solid phase reaction method, $BaCO_3$, $SrCO_3$ and $TiO_2$ are weighed out to make a desired composition, ground in a ball mill and then mixed with one another. Thereafter, the product is subjected to press-moulding, calcined at a temperature of 1300 to 1500 °C, ground in the ball mill again, and then subjected to sieving or screening treatment, to obtain a fine powder. However, with this solid phase reaction method, it takes a long time to grind the materials in the ball mill, and in addition impurities and powder of large size are inevitably mixed with the product. Moreover, the particle size distribution tends to be unfavourable.

Another previously proposed synthesizing method is an oxalate method. In this method, complex metal oxalate is synthesized and then roasted, thereby to make a fine powder of $Ba_{1-x}Sr_xTiO_3$. In this method, the process for synthesizing uniform complex metal oxalate is complicated and in addition, organic compounds are used, so that the manufacturing cost becomes high. Moreover, although the desired fine powder is obtained, the powder is essentially produced from the original oxalate powder. To avoid the formation of powder having the original oxalate structure, sintering is necessary, and this method has not yet reached the stage of industrial production.

In a manufacturing method according to this invention, a hydrolyzed compound of a Ti compound, a water soluble salt of Ba, and a water soluble salt of Sr are reacted with one another in a strongly alkaline aqueous solution at a temperature of approximately the boiling point thereof. The resultant precipitate is filtered, rinsed with water and then dried, producing a complex metal titanate fine powder of barium-strontium titanium titanate $Ba_{1-x}Sr_xTiO_3$ (O is less than x is less than 1).

As the hydrolyzed compound of a Ti compound, there can be used one which is formed by hydrolyzing an aqueous solution such as of $TiCl_4$

Also, a method in which metal alkoxide is used to produce complex metal titanate fine powder of barium-strontium titanate $Ba_{1-x}Sr_xTiO_3$ has recently been studied. This method uses a special organic compound such as metal alkoxide, so that the manufacturing cost is high as compared with the oxalate method.

'Inorganic Materials', Translations of Isvestiya Akademin Nauk SSSR, Volume 11, No 7, 1975 A M Golub et al :'Preparation of Barium Titanate from Coprecipitated $BaCO_3$-$BaF_2$-$TiO(OH)_2$', Pages 1876-79 discloses a process for producing barium titanate containing fluoride by a coprecipitation method wherein a hydrolysis product of an inorganic titanium compound ($K_2TiF_6$) and a water soluble barium compound ($BaCl_2$) are reacted in an alkaline aqueous medium to form the barium titanate.

European patent specification EP-A1 0 079 392 (corresponding to WO-A1-82/04254) discloses barium/strontium titanate which is obtained by hydrolyzing or pyrolizing the corresponding alkoxy titanates as a finely divided, crystalline powder.

UK patent specification GB-A-530 584 discloses a method of making alkaline earth titanates by reacting hydrated titanium oxide (obtained by the hydrolysis of titanium salt solution) with alkaline earth hydroxides in an aqueous solution. The desired products are mixed titanates suitable for use as pigments.

UK patent specification GB-A-715 762 refers to GB-A-530 584 and discloses a method of producing ferro-electric titanates of alkaline earth metals in which at least one alkaline earth metal hydroxide is reacted with a stoichiometric quanity of $TiO_2$ in an aqueous medium having an initial pH of at least 10 at a temperature preferably in the range 200 to 400°C and under a pressure preferably in the range of 20 to 50 atm.

US patent specification US-A-3 577 487 discloses a method of making sub-micron sized alkaline earth metal titanates by reacting hydrated titanium dioxide with an alkaline earth metal hydroxide in an aqueous medium and subjecting the slurry obtained from the reaction to a thermal deposition in a fluid energy mill operating at elevated temperatures.

According to the present invention there is provided a method of manufacturing dielectric titanate fine powder having the formula $Ba_{1-x}Sr_xTiO_3$ wherein 0 is less than x is less than 1;
the method comprising the steps of:
preparing hydrated $TiO_2$ by dissolving an inorganic titanium compound in a neutral or alkaline aqueous solution;
reacting said hydrated $TiO_2$ with a water soluble salt of Ba and a water soluble salt of Sr in an alkaline aqueous solution having a pH not less than 13.0 thereby to obtain said dielectric fine powder having the formula $Ba_{1-x}Sr_xTiO_3$ wherein 0 is less than x is less than 1;

the pH of said alkaline aqueous solution being brought to the required value by the presence of sodium hydroxide or potassium hydroxide; and

filtering said fine powder from the remaining solution.

The invention will now be described by way of example with reference to the accompanying drawings, throughout which like parts are referred to by like references, and in which:

Figures 1 and 2 are diagrams showing X-ray diffraction patterns of barium-strontium titanate fine powder manufactured by a method according to this invention;

Figure 3 is a photograph of fine powder manufactured by a method according to this invention, taken by a transmission electron microscope;

Figure 4 is a characteristic graph showing the measured capacitance of a disc made of fine powder manufactured by a method according to this invention;

Figure 5 is a characteristic graph showing the relation between a lattice constant and Sr content; and

Figure 6 is a characteristic graph showing the relation between Curie temperature and Sr content.

or $Ti(SO_4)_2$ with an alkaline solution such as $NH_4OH$ or $NaOH$. However, when $Ti(SO_4)_2$ is used, it is necessary that the hydrolyzed solution is repeatedly subjected to decantation and filtering so as to remove therefrom the sulphate group $SO_4{--}$.

As the water soluble salt of Ba, there can be used, for example, $Ba(NO_3)_2$, $Ba(OH)_2$, $BaCl_2$ or $Ba(CH_3COO)_2$. Also, a hydrolyzed product thereof can be used.

As the water soluble salt of Sr, there can be used, for example, $SrO$, $Sr(OH)_2$, $Sr(OH)_2 \cdot 8H_2O$, $Sr(NO_3)_2$ or $Sr(CH_3COO)_2$.

As the reaction conditions for synthesizing the barium-strontium titanate fine powder, the pH is selected to be not less than 13.0, the molar ratio of (Ba + Sr)/Ti is preferably selected to be in the range from 0.5 to 5.0, and the reaction temperature is preferably selected in the range from 15 °C to the boiling point thereof.

As described above, the complex metal titanate fine powder of barium-strontium titanate can be synthesized directly by a wet synthesizing method under normal pressure. The fine powder made by this method has a very small and uniform diameter, and has less impurity than the powder made by the previously proposed methods. As compared with a dry method, such as the solid phase reaction method, the present method is superior in that a better fine powder can be obtained, and that the manufacturing process is very simple. Moreover, as compared with the oxalate method and the metal alkoxide method, in addition to the fact that the size of the fine powder thus made is substantially the same as that of the above oxalate and metal alkoxide methods, no organic compound is used and hence the fine powder can be manufactured by a simple and relatively cheap manufacturing process. Furthermore, when a fine powder made by the present method is to be used as a dielectric material, it is possible to make the dielectric material have a required Curie temperature, namely, to set the maximum value of the dielectric constant at a desired temperature up to 135 °C.

The invention will now be described with reference to examples.

Example 1

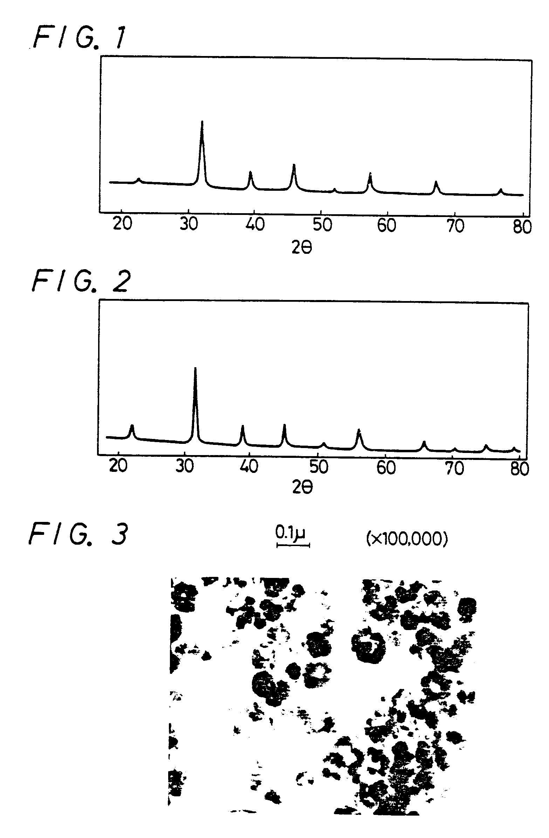

Figure 1 shows results obtained when the fine powder of $Ba_{0.8}Sr_{0.2}Ti$ was analyzed by X-ray analysis using a Cu target and a Ni filter. From this X-ray diffraction pattern, it was confirmed that the fine powder was a single phase $Ba_{0.8}Sr_{0.2}TiO_3$ of cubic perovskite structure (x = 0.2 is based on the result of chemical analysis). The lattice constant $a_0$ of this fine powder was $4.004 \times 10^{-10}$ m.

Figure 3 shows a photograph of the fine powder taken by a transmission electron microscope. From this photograph, it can be seen that the powder comprises fine particles which have a diameter of about $500 \times 10^{-10}$ m and are very uniform in size.

Example 2

50 g of $TiCl_4$ was dissolved in 50 ml of iced water while being stirred so as to make a Ti aqueous solution. Thereafter, water was added thereto to make 500 ml of aqueous solution. Next, 45.92 g of $Ba(NO_3)_2$ and 18.59 g of $Sr(NO_3)_2$ were added and dissolved into this aqueous solution. Then, the aqueous solution was adjusted to have a pH of 14 by adding a KOH solution thereto, and water was added to make the volume of the aqueous solution 1 l. While being stirred, the aqueous solution was reacted at 100 °C for four hours. The resulting precipitate was rinsed with water by decantation, filtered, further rinsed with water and then dried at 100 °C for a day.

The X-ray diffraction pattern of the fine particle powder obtained by this method was substantially the same as that shown in Figure 1, and it was confirmed that this fine powder was $Ba_{2/3}Sr_{1/3}TiO_3$. Using the transmission electron microscope, fine powder of substantially the same shape as that in Figure 3 was observed. The lattice constant $a_0$ of the fine powder was $3.991 \times 10^{-10}$ m.

Example 3

50 g to $TiCl_4$ was dissolved in 50 ml of iced water while being stirred so as to make a Ti aqueous solution. Then, water was added thereto to make 500 ml of aqueous solution. Then, 34.44 g of $Ba(NO_3)_2$ and 27.99 g of $Sr(NO_3)_2$ were added and dissolved into this aqueous solution. Thereafter, the aqueous solution was adjusted to have a pH of 14 by adding a KOH solution thereto, and water was added to make the volume of the aqueous solution 1 l. While being stirred, this aqueous solution was reacted at 100 °C for four hours. The resulting precipitate was rinsed with water by decantation, filtered, further rinsed with water and then dried at 100 °C for a day.

The X-ray diffraction pattern of the fine powder obtained by this method was substantially the same as that of Figure 1, and it was confirmed that this fine powder was $Ba_{0.5}Sr_{0.5}TiO_3$ of cubic perovskite structure. Using the transmission electron microscope, fine powder of substantially the same shape as that of Figure 3 was observed. In this case, the lattice constant $a_0$ was $3.986 \times 10^{-10}$ m.

Example 4

50 g of $TiCl_4$ was dissolved in 50 ml of iced water while being stirred so as to make a Ti aqueous solution. Then, water was added thereto to make 500 ml of aqueous solution. Next, 22.96 g of $Ba(NO_3)_2$ and 37.19 g of $Sr(NO_3)_2$ were added and dissolved into this aqueous solution. Thereafter, the aqueous solution was adjusted to have a pH of 14 by adding a KOH solution thereto, and water was further added to make 1 l of aqueous solution. While being stirred, this aqueous solution was reacted at 100°C for four hours. The resulting precipitate was rinsed with water by decantation, filtered, further rinsed with water and then dried at 100 °C for a day.

The X-ray diffraction pattern of the fine powder made by this method was substantially the same as that of Figure 1, and it was confirmed that this fine powder was $Ba_{1/3}Sr_{2/3}TiO_3$ of cubic perovskite structure. Using the transmission electron microscope, fine powder of substantially the same shape as that of Figure 3 was observed, In this case, the lattice constant $a_0$ was $3.948 \times 10^{-10}$ m.

Example 5

50 g of $TiCl_4$ was dissolved in 50 ml of iced water while being stirred so as to make a Ti aqueous solution. Then, water was added thereto to make 500 ml of aqueous solution. Then, 13.78 g of $Ba(NO_3)_2$ and 44.63 g of $Sr(NO_3)_2$ were added and dissolved into this aqueous solution. Thereafter, the aqueous solution was adjusted to have a pH of 14 by adding a KOH solution thereto, and water was further added to make 1 l of aqueous solution. While being stirred, the aqueous solution was reacted at 100 °C for four hours. The resulting precipitate was rinsed with water by decantation, filtered, further rinsed with water and then dried at 100 °C for a day.

The X-ray diffraction pattern of the fine powder obtained by this method was as shown in Figure 2 and it was confirmed that this fine powder was $Ba_{0.2}Sr_{0.8}TiO_3$ of cubic perovskite structure. Comparing the X-ray diffraction patterns of the five fine powders of Examples 1 to 5 respectively, it was clear that as the value x becomes large, namely, in accordance with the sequential order from Example 1 to Example 5, the diffraction peak was shifted in the same order. Moreover, using the transmission electron microscope, fine powder of substantially the same shape as that of Figure 3 was observed in this example. In this case, its lattice constant $a_0$ was $3.936 \times 10^{-10}$ m.

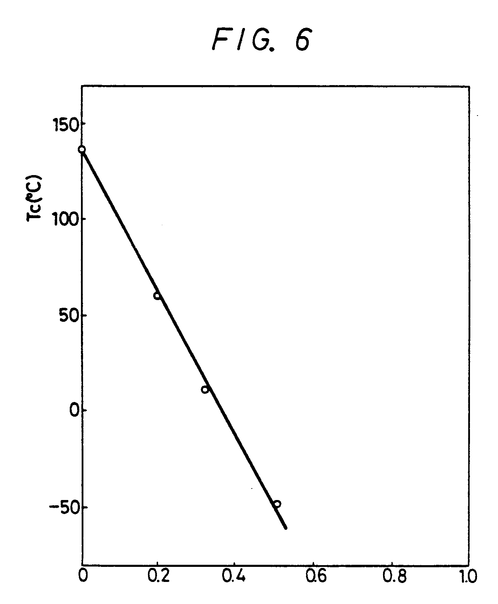

Regarding the $Ba_{1-x}Sr_xTiO_3$ fine powders obtained in Examples 1 to 5, a characteristic graph showing the relation between the lattice constant $a_0$ and the value x is shown in Figure 5. From the graph of Figure 5, it is clear that the curve A substantially follows Vegard's law.

Example 6

50 g to $TiCl_4$ was dissolved in 50 ml of iced water while being stirred so as to make a Ti aqueous solution. Then, water was added thereto to make 500 ml aqueous solution. Next, this aqueous solution was adjusted to have a pH of 7 by adding an NaOH solution thereto. 66.52 g of $Ba(OH)_2 \cdot 8H_2O$ and 14.01 g of $Sr(OH)_2 \cdot 8H_2O$ were added and dissolved into this aqueous solution, Thereafter, the aqueous solution was adjusted to have a pH of 13.5 by adding an NaOH solution thereto, and water was added thereto to make 1 l of aqueous solution. While being stirred, the aqueous solution was reacted at 100 °C for four hours. The resulting precipitate was filtered, rinsed with water and then dried at 70 °C for two days.

The X-ray diffraction pattern of the fine powder obtained by this method is the same as that of Figure 1 except that the diffraction intensity is very slightly lowered as compared with that of Figure 1. And, it was confirmed that this fine powder was barium-strontium titanate of cubic perovskite structure. In this case, the lattice constant $a_0$ was $4.002 \times 10^{-10}$ m. Moreover, using the transmission electron microscope, fine powder of substantially the same shape as that of Figure 3 was observed.

Example 7

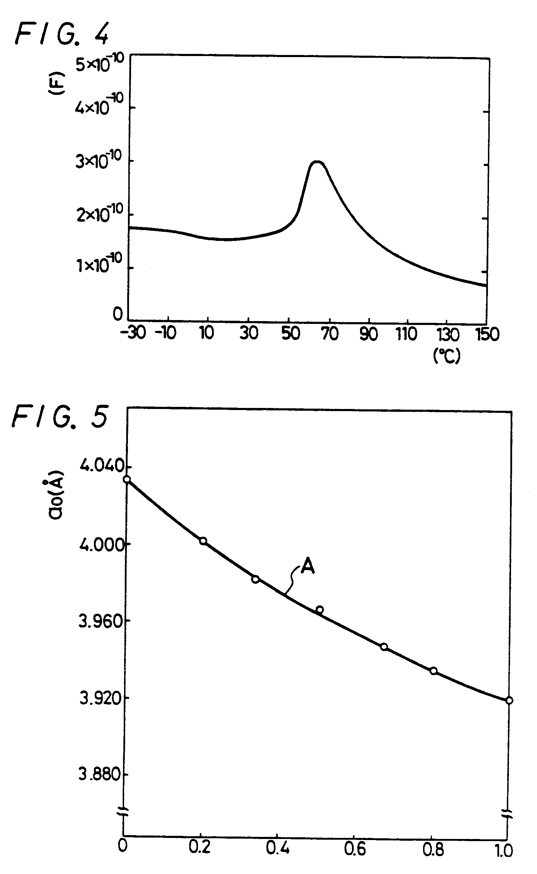

The respective fine powders synthesized in Examples 1 to 5 were used and subjected to heat treatment at 800 °C for two hours in the atmosphere. Thereafter, they were pressed at 1500 $kg/cm^2$ and

moulded so as to make disc-shaped products. After the respective disc-shaped products had been fired at 1300 °C (the speed of increase of the temperature was 100 °C/hour) for two hours in the atmosphere, the change with temperature of dielectric constant $\varepsilon$ (measured as the change with temperature of the electrostatic capacitance) thereof were measured at 1 kHz. By way of example, a characteristic graph showing the results in which the capacitance of the disc-shape products made of $Ba_{0.8}Sr_{0.2}TiO_3$ fine powder was measured is shown in Figure 4. Since no additives to improve the sintering property was used, the density did not reach the vicinity of 100 % of the theoretical density, so that the true dielectric constant can not be obtained. However, it may be considered that the temperature where the peak value was obtained is substantially equal to the Curie temperature Tc.

Figure 6 is a characteristic graph showing the relation between the Curie temperature Tc and the value x of $Ba_{1-x}Sr_xTiO_3$. This characteristic graph of Figure 6 makes it clear that with methods according to this invention, it is possible to obtain a dielectric material in which the maximum value of the dielectric constant is set at a desired temperature (not higher than 135 °C).

**Claims**

1. A method of manufacturing dielectric titanate fine powder having the formula $Ba_{1-x}Sr_xTiO_3$ wherein 0 is less than x is less than 1; the method comprising the steps of:
preparing hydrated $TiO_2$ by dissolving an inorganic titanium compound in a neutral or alkaline aqueous solution;
reacting said hydrated $TiO_2$ with a water soluble salt of Ba and a water soluble salt of Sr in an alkaline aqueous solution having a pH not less than 13.0 thereby to obtain said dielectric fine powder having the formula $Ba_{1-x}Sr_xTiO_3$ wherein 0 is less than x is less than 1;
the pH of said alkaline aqueous solution being brought to the required value by the presence of sodium hydroxide or potassium hydroxide; and filtering said fine powder from the remaining solution.

2. A method according to claim 1 wherein the molar ratio (Ba + Sr)/Ti is in the range from 0.5 to 5.0.

3. A method according to claim 1 or claim 2 wherein the reaction temperature is in the range from 15°C to the boiling point of said aqueous solution.

**Patentansprüche**

1. Verfahren zur Herstellung eines feinpulvrigen dielektrischen Titanats der Formel $Ba_{1-x}Sr_xTiO_3$, wobei 0 kleiner als x kleiner als 1 ist, mit den Schritten zum
Bereiten von wässrigem $TiO_2$ durch Lösen einer anorganischen Titan-Verbindung in einer neutralen oder alkalischen wässrigen Lösung,
Reagieren des wässrigen $TiO_2$ mit einem wasserlöslichen Salz von Ba und einem wasserlöslichen Salz von Sr in einer alkalischen wässrigen Lösung mit einem pH-Wert, der nicht kleiner als 13,0 ist, um dadurch das dielektrische feine pulver der Formel $Ba_{1-x}Sr_xTiO_3$ zu erhalten, wobei 0 kleiner als x kleiner als 1 ist,
Bringen des pH-Wertes der alkalischen wässrigen Lösung auf den erforderlichen Wert durch die Anwesenheit von Natriumhydroxyd oder Kaliumhydroxyd, und
Filtern des feinen Pulvers aus der verbleibenden Lösung.

2. Verfahren nach Anspruch 1, bei dem das Molekülverhältnis (Ba + Sr)/Ti in dem Bereich von 0,5 bis 5,0 liegt.

3. Verfahren nach Anspruch 1 oder 2, bei dem die Reaktionstemperatur in dem Bereich von 15 °C bis zum Siedepunkt der wässrigen Lösung liegt.

**Revendications**

1. Un procédé de fabrication d'une poudre fine de titanate diélectrique ayant la formule $Ba_{1-x}Sr_xTiO_3$ dans laquelle 0<x<1. Ce procédé comprenant les étapes suivantes :
préparation du $TiO_2$ hydraté en dissolvant un composé du titane inorganique dans une solution aqueuse neutre ou alcaline ;
réaction dudit $TiO_2$ hydraté avec un sel de Ba soluble dans l'eau et un sel de Sr soluble dans l'eau dans une solution aqueuse alcaline ayant un pH qui n'est pas inférieur à 13,0 pour obtenir ladite poudre fine diélectrique ayant la formule $Ba_{1-x}Sr_xTiO_3$ dans laquelle 0<x<1 ;
le pH de la solution aqueuse alcaline étant amené à la valeur requise par la présence d'hydroxyde de sodium ou d'hydroxyde de potassium ; et
filtration de ladite poudre fine de la solution restante.

2. Un procédé selon la revendication 1, selon lequel le rapport molaire (Ba + Sr)/Ti est compris dans l'intervalle de 0,5 à 5,0.

3. Un procédé selon la revendication 1 ou 2, selon lequel la température de réaction est comprise dans l'intervalle de 15°C au point d'ébullition de ladite solution aqueuse.

FIG. 1

2θ

FIG. 2

2θ

FIG. 3

0.1μ    (×100,000)

FIG. 4

FIG. 5

# F I G. 6